# EUROPÄISCHE PATENTSCHRIFT

(11) **EP 1 494 889 B1**
(45) Veröffentlichungstag und Bekanntmachung des Hinweises auf die Patenterteilung: **21.09.2005**
(21) Anmeldenummer: 03724863.0
(22) Anmeldetag: 07.04.2003
(51) Int. Cl.: B60L 7/26

(54) **VERFAHREN ZUM ELEKTRODYNAMISCHEN BREMSEN EINES SCHIENENFAHRZEUGS**
METHOD FOR ELECTRODYNAMICALLY BRAKING A RAIL VEHICLE
PROCEDE DE FREINAGE ELECTRODYNAMIQUE D'UN VEHICULE SUR RAILS

(30) Priorität: 18.04.2002 DE 10217385
(43) Veröffentlichungstag der Anmeldung: 12.01.2005
(73) Patentinhaber: SIEMENS AKTIENGESELLSCHAFT, 80333 München (DE)
(72) Erfinder: KAHRS, Helmut, 91361 Pinzberg (DE); KLIMA, Heinrich, 91056 Erlangen (DE); SCHMELZ, Michael, 65779 Kelkheim (DE)
(86) Internationale Anmeldenummer: PCT/DE2003/001139
(87) Internationale Veröffentlichungsnummer: WO 2003/086809

(56) Entgegenhaltungen:
- EP-A- 0 321 987
- DE-A- 3 228 772
- DE-A- 4 107 514
- GB-A- 861 973
- US-A- 4 225 813
- US-A- 4 270 716

## Beschreibung

Die Erfindung betrifft ein Verfahren zum elektrodynamischen Bremsen eines mit einem Antrieb ausgestatteten Schienenfahrzeugs, wobei die Beschleunigung des Schienenfahrzeugs in Abhängigkeit von seiner Geschwindigkeit geregelt wird.

Bisher wurde häufig eine elektrodynamische Bremse nicht bis zum Stillstand des Schienenfahrzeugs eingesetzt. Es wurde befürchtet, dass die Bremskraft bei kleinen Geschwindigkeiten zu großen Schwankungen unterliegt, die insbesondere auf den Fahrweg (Steigung bzw. Gefälle) zurückzuführen sind.

Unterhalb einer Geschwindigkeit von 2 km/h bis 7 km/h wurde stets eine vorhandene mechanische Bremse eingesetzt. Dabei ergibt sich der Nachteil, dass mit dem Stillstand des Schienenfahrzeugs ein für die Fahrgäste unkomfortabler Ruck entsteht.

Eine geschwindigkeitsabhängige Bremsverzögerung ist aus der DE 41 07 514 A1 bekannt. Dabei kommt es darauf an, einen sehr kurzen Bremsweg zu erreichen.

Aus der gattungsbildenden US 4,270,716 ist ein Verfahren zum Beschleunigen und Abbremsen eines Schienenfahrzeuges bekannt, bei dem zum Vermeiden einer ruckenden Fahrweise die Beschleunigung, die beim Abbremsen auch negativ sein kann, so geregelt wird, dass sie proportional zur Quadratwurzel der Geschwindigkeit ist.

Der Erfindung liegt die Aufgabe zugrunde, ein alternatives Verfahren zum elektrodynamischen Bremsen eines Schienenfahrzeuges anzugeben, das bis zum Stillstand ein sicheres Abbremsen ermöglicht, so dass die einen unerwünschten Ruck verursachende mechanische Bremse im Normalfall nicht gebraucht wird und dadurch auch weniger verschleißt.

Die Aufgabe wird gemäß der Erfindung dadurch gelöst, dass die Beschleunigung auf eine Sollbeschleunigung geregelt wird, die proportional zur Geschwindigkeit ist.

Es wird der Vorteil erzielt, dass mit einer vereinfachten Regelung bei jeder Geschwindigkeit des Schienenfahrzeuges, auch bei einer sehr kleinen Geschwindigkeit, eine optimale Verzögerung (negative Beschleunigung) möglich ist. Man kann also das Schienenfahrzeug allein mit der elektrodynamischen Bremse sicher zum Stillstand bringen. Die elektrodynamische Bremse arbeitet vorteilhafterweise ruckfrei.

Die Beziehung, die die Beschleunigung in Abhängigkeit von der Geschwindigkeit aufzeigt, kann als Kennlinie abgespeichert sein.

Die Sollbeschleunigung kann auch für einzelne Abschnitte (Fahrwegabschnitte oder Fahrzeitabschnitte), die aufeinander folgen, proportional zur Geschwindigkeit sein. Es ergibt sich so eine Kennlinie aus linearen Abschnitten.

Es wird während des Bremsvorgangs die jeweils aktuelle Sollbeschleunigung mit der Kennlinie aus der Geschwindigkeit des Schienenfahrzeugs bestimmt und die aktuelle Beschleunigung wird so geregelt, dass sie möglichst der Sollbeschleunigung entspricht.

Einflüsse der befahrenen Strecke (Steigung oder Gefälle) werden durch die Regelung der Beschleunigung ausgeglichen.

Beispielsweise kann die Beschleunigung indirekt geregelt werden, indem das Drehmoment des Antriebs des Schienenfahrzeugs geregelt wird. Die Regelung des Drehmoments ist vergleichsweise einfacher durchführbar als eine direkte Regelung der Beschleunigung.

Zur Regelung des Drehmoments kann beispielsweise ein PI-Regler eingesetzt werden.

Beispielsweise kann bei der Regelung vorgesehen sein, dass das Drehmoment stets innerhalb von vorgegebenen Grenzen gehalten wird. Diese Grenzen werden beispielsweise vom Fahrer vorgegeben.

Beispielsweise wird zum Drehmoment zur Vorsteuerung ein Zusatzdrehmoment addiert, das proportional zur Sollbeschleunigung ist. Dabei ist die Proportionalitätskonstante abhängig von Fahrzeugwerten.

Damit wird der Vorteil erzielt, dass Einflüsse, die auf den Aufbau des Fahrzeuges selbst zurückzuführen sind, ganz oder weitgehend ausgeschlossen werden.

Die Fahrzeugwerte sind beispielsweise insbesondere die Fahrzeugmasse, aber auch die Getriebeübersetzung und/oder der Raddurchmesser.

Die momentane Geschwindigkeit des Schienenfahrzeuges wird beispielsweise aus den Drehzahlen des Antriebs und/oder einer Achse ermittelt.

Die Sollbeschleunigung wird dann beispielsweise mit Hilfe der Kennlinie bestimmt, die die Sollbeschleunigung als Funktion der Geschwindigkeit darstellt. Die Sollbeschleunigung ist dabei proportional zur Geschwindigkeit.

Die momentane Beschleunigung wird beispielsweise als erste Ableitung der ermittelten Geschwindigkeit bestimmt. Es ist dann ein unmittelbarer Vergleich der momentanen Beschleunigung mit der Sollbeschleunigung möglich und eine Regelung der Beschleunigung durchführbar.

Der Antrieb des Schienenfahrzeugs ist in der Regel eine Asynchronmaschine mit Pulswechselrichter. Wenn der Antrieb eine Koppelung eines I-n-Modells mit einem U-Modell eines Motors aufweist, ist eine Regelung der Beschleunigung bis zum Stillstand des Schienenfahrzeugs besonders gut durchführbar.

Das Verfahren nach der Erfindung ist für eine allgemeine Regelung der Fahrt des Schienenfahrzeugs einsetzbar. Insbesondere ist das Verfahren gut geeignet, um ein Schienenfahrzeug bis zum Stillstand abzubremsen, ohne dass eine mechanische Bremse herangezogen werden muss. Es ist also vorteilhafterweise ein ruckfreies Anhalten gewährleistet.

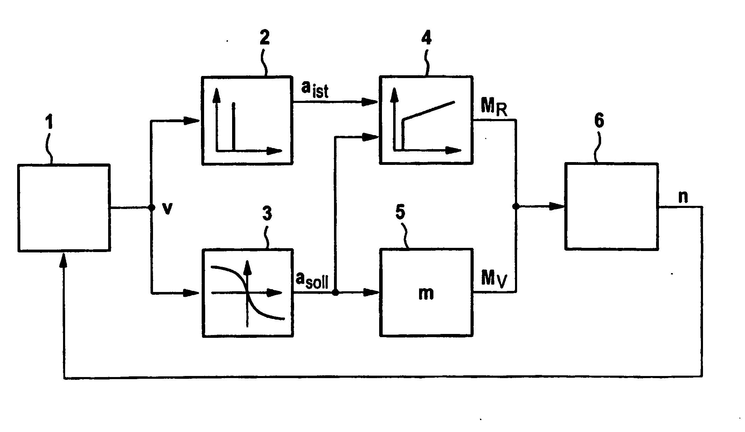

Das Verfahren nach der Erfindung zum elektrodynamischen Bremsen eines Schienenfahrzeugs wird anhand der Zeichnung näher erläutert:

Zunächst wird die Geschwindigkeit v des Schienenfahrzeugs bestimmt 1. Aus dem Geschwindigkeitswert wird nach Bildung der ersten Ableitung des Geschwindigkeitsverlaufs die momentane Beschleunigung a_{Ist} bestimmt 2.

Parallel dazu wird mit einer vorgegebenen Kennlinie aus der Geschwindigkeit v die Sollbeschleunigung a_{Soll} ermittelt 3. Gemäß der Kennlinie ist die Sollbeschleunigung a_{Soll} proportional zur Geschwindigkeit v mit der Proportionalitätskonstanten k.

Sowohl die momentane Beschleunigung a_{Ist} als auch die Sollbeschleunigung a_{Soll} werden dem Regler 4 zugeführt, der ein PI-Regler sein kann. Am Ausgang des Reglers 4 wird das für die gewünschte Regelung der momentanen Beschleunigung a_{Ist} auf die Sollbeschleunigung a_{Soll} erforderliche Drehmoment M_{R} für den Antrieb 6 abgegeben.

Um Einflüsse durch das Schienenfahrzeug selbst auszugleichen, wird ein Zusatzdrehmoment M_{V} zum bereits berechneten Drehmoment M_{R} vor der Ansteuerung des Antriebs 6 addiert. Dieses Zusatzdrehmoment M_{V} wird bestimmt 5 durch das Produkt der Sollbeschleunigung a_{Soll} und einer Proportionalitätskonstanten m, die abhängig sein kann von der Fahrzeugmasse, der Getriebeübersetzung und/oder dem Raddurchmesser.

Die Summe der Drehmomente M_{R} + M_{V} gelangt zum Antrieb 6, wo die Beschleunigung a_{Ist} des Schienenfahrzeugs über das Drehmoment M_{R} + M_{V} geregelt wird.

Die Drehzahl n des Antriebs 6 dient zum Bestimmen der Geschwindigkeit v des Schienenfahrzeugs und wird vom Antrieb 6 zur Bestimmung der Geschwindigkeit 1 bereit gestellt.

Mit dem geschilderten Verfahren ist eine gleichmäßige Regelung der Beschleunigung (Verzögerung) des Schienenfahrzeugs, insbesondere bis zum Stillstand hin, durchführbar.

## Patentansprüche

1. Verfahren zum elektrodynamischen Bremsen eines mit einem Antrieb (6) ausgestatteten Schienenfahrzeugs, wobei die Beschleunigung (a_{Ist}) des Schienenfahrzeugs in Abhängigkeit von seiner Geschwindigkeit (v) geregelt wird,
**dadurch gekennzeichnet, dass** die Beschleunigung (a_{Ist}) auf eine Sollbeschleunigung (a_{Soll}) geregelt wird, die proportional zur Geschwindigkeit (v) ist.

2. Verfahren nach Anspruch 1,
**dadurch gekennzeichnet, dass** die Sollbeschleunigung (a_{Soll}) für einzelne Abschnitte proportional zur Geschwindigkeit (v) ist.

3. Verfahren nach einem der Ansprüche 1 oder 2,
**dadurch gekennzeichnet, dass** zur indirekten Regelung der Beschleunigung (a_{Ist}) das Drehmoment (M_{R}) des Antriebs (6) geregelt wird.

4. Verfahren nach Anspruch 3,
**dadurch gekennzeichnet, dass** zur Regelung des Drehmoments (M_{R}) ein PI-Regler eingesetzt wird.

5. Verfahren nach einem der Ansprüche 3 oder 4,
**dadurch gekennzeichnet, dass** bei der Regelung des Drehmoments (M_{R}) dieses innerhalb von vorgegebenen Grenzen gehalten wird.

6. Verfahren nach einem der Ansprüche 3 bis 5,
**dadurch gekennzeichnet, dass** zum Drehmoment (M_{R}) ein Zusatzdrehmoment (M_{V}) addiert wird, das proportional zur Sollbeschleunigung (a_{Soll}) ist, und dass die Proportionalitätskonstante abhängig von Fahrzeugwerten ist.

7. Verfahren nach Anspruch 6,
**dadurch gekennzeichnet, dass** die Fahrzeugwerte Fahrzeugmasse, Getriebeübersetzung und/oder Raddurchmesser sind.

8. Verfahren nach einem der Ansprüche 1 bis 7,
**dadurch gekennzeichnet, dass** die Geschwindigkeit (v) des Schienenfahrzeugs aus Drehzahlen (n) des Antriebs (6) und/oder einer Achse ermittelt wird.

9. Verfahren nach einem der Ansprüche 1 bis 8,
**dadurch gekennzeichnet, dass** die Beschleunigung (a_{Ist}) als erste Ableitung der Geschwindigkeit (v) bestimmt wird.

## Claims

1. Method for electrodynamically braking a rail vehicle which is equipped with a drive (6), wherein the acceleration (a_{act}) of the rail vehicle is controlled as a function of its velocity (v), **characterized in that** the acceleration (a_{act}) is controlled to a set point acceleration (aₛₑₜₚ) which is proportional to the velocity (v).

2. Method according to Claim 1, **characterized in that** the set point acceleration (aₛₑₜₚ) is proportional to the velocity (v) for individual sections.

3. Method according to one of Claims 1 or 2, **characterized in that** in order to control the acceleration (a_{act}) indirectly, the torque (M_{R}) of the drive (6) is controlled.

4. Method according to Claim 3, **characterized in that** a PI controller is used to control the torque (M_{R}).

5. Method according to one of Claims 3 or 4, **characterized in that** when the torque (M_{R}) is controlled it is kept within predefined limits.

6. Method according to one of Claims 3 to 5, **characterized in that** an additional torque (M_{V}), which is proportional to the set point acceleration (aₛₑₜₚ), is added to the torque (M_{R}), and **in that** the proportionality constant is dependent on vehicle values.

7. Method according to Claim 6, **characterized in that** the vehicle values are the vehicle mass, the transmission ratio and/or the diameter of the wheels.

8. Method according to one of Claims 1 to 7, **characterized in that** the velocity (v) of the rail vehicle is determined from rotational speeds (n) of the drive (6) and/or of an axle.

9. Method according to one of Claims 1 to 8, **characterized in that** the acceleration (a_{act}) is determined as a first derivative of the velocity (v).

## Revendications

1. Procédé de freinage électrodynamique d'un véhicule ferroviaire muni d'un entraînement (6) en réglant l'accélération (a_{Ist}) du véhicule ferroviaire en fonction de sa vitesse (v),
**caractérisé en ce qu'**on règle l'accélération (a_{Ist}) sur une accélération (a_{Soll}) de consigne qui est proportionnelle à la vitesse (v).

2. Procédé suivant la revendication 1, **caractérisé en ce** l'accélération (a_{Soll}) de consigne est proportionnelle à la vitesse (v) pour certaines parties.

3. Procédé suivant l'une des revendications 1 ou 2,
**caractérisé en ce que**, pour régler indirectement l'accélération (a_{Ist}), on règle le couple (M_{R}) de rotation de l'entraînement (6).

4. Procédé suivant la revendication 3,
**caractérisé en ce que** l'on utilise un régulateur PI pour régler le couple (M_{R}) de rotation.

5. Procédé suivant l'une des revendications 3 ou 4,
**caractérisé en ce que**, lorsque l'on régule le couple (M_{R}) de rotation, on le maintient dans des limites prescrites.

6. Procédé suivant l'une des revendications 3 à 5,
**caractérisé en ce que** l'on ajoute au couple (M_{R}) de rotation un couple (M_{V}) de rotation supplémentaire qui est proportionnel à l'accélération (a_{Soll}) de consigne et **en ce que** la constante de proportionnalité dépend de valeurs du véhicule.

7. Procédé suivant la revendication 6,
**caractérisé en ce que** les valeurs du véhicule sont la masse du véhicule, le rapport de transmission et/ou le diamètre des roues.

8. Procédé suivant l'une des revendications 1 à 7,
**caractérisé en ce que** l'on détermine la vitesse (v) du véhicule ferroviaire à partir des vitesses (n) de rotation de l'entraînement (6) et/ou d'un essieu.

9. Procédé suivant l'une des revendications 1 à 8,
**caractérisé en ce que** l'on détermine l'accélération (a_{Ist}) en tant que dérivée première de la vitesse (v).
